(19) Europäisches Patentamt

European Patent Office

Office européen des brevets

(11) **EP 1 004 955 B1**

(12) **EUROPÄISCHE PATENTSCHRIFT**

(45) Veröffentlichungstag und Bekanntmachung des Hinweises auf die Patenterteilung:
**20.12.2006 Patentblatt 2006/51**

(51) Int Cl.:
***G06F 1/035*** *(2006.01)*

(21) Anmeldenummer: **99119307.9**

(22) Anmeldetag: **29.09.1999**

(54) **Einrichtung zur Erzeugung eines digitalen Signals unter Verwendung eines Phasenakkumulators**

Device for generating a signal using a phase accumulator

Dispositif pour générer un signal numérique utilisant un accumulateur de phase

(84) Benannte Vertragsstaaten:
**AT BE CH CY DE DK ES FI FR GB GR IE IT LI LU MC NL PT SE**

(30) Priorität: **24.11.1998 DE 19854098**

(43) Veröffentlichungstag der Anmeldung:
**31.05.2000 Patentblatt 2000/22**

(73) Patentinhaber: **Marconi Communications GmbH
71522 Backnang (DE)**

(72) Erfinder: **Kloepfer, Rainer
71522 Backnang (DE)**

(74) Vertreter: **Manitz, Finsterwald & Partner GbR
Postfach 31 02 20
80102 München (DE)**

(56) Entgegenhaltungen:
**EP-A- 0 441 121        DE-A- 4 440 508
US-A- 4 482 974        US-A- 4 482 975
US-A- 4 536 853        US-A- 4 809 205**

## Beschreibung

Stand der Technik

Die Erfindung geht aus von einem Verfahren nach dem Oberbegriff des Anspruchs 1. Ein solches Verfahren ist aus der DE 44 40 508 A1 bekannt. Bei diesem Verfahren wird eine Anzahl N Abtastwerte benutzt. Bei einem durch einen Phasenakkumulator erzeugten Phasenwert, dem keiner der N Abtastwerte zugeordnet ist, werden die beiden diesem Phasenwert nächstliegenden Abtastwerte einer Interpolation mindestens erster Ordnung unterzogen. Der so gewonnene interpolierte Abtastwert wird zur Erzeugung des digitalen einstellbaren Signals herangezogen. Um einen interpolierten Abtastwert zu erhalten, sind zwei sequentielle Speicherzuriffe auf Abtastwerte nötig.

Vorteile der Erfindung

Mit den Maßnahmen des Anspruchs 1 oder des Anspruchs 10 läßt sich ein einstellbares digitales Signal auch bei sehr hohen Taktraten erzeugen, da zwei sequentielle Speicherzugriffe auf Abtastwerte nicht benötigt werden. Auch wird kein Subtrahierer solcher sequentiell ausgelesener Abtastwerte benötigt. Mit einer gleichen Speicheradresse kann während eines Taktschrittes sowohl auf einen Abtastwert als auch auf einen Abtastdifferenzwert zugegriffen werden. Zur Erzeugung des einstellbaren digitalen Signals ist lediglich noch eine Addition und eine Bewertung mit einem Interpolationsparameter nötig, was auch beim Verfahren gemäß der DE 44 40 508 A1 erforderlich ist.

Die Wortbreite der gespeicherten Abtastdifferenzwerte kann gegenüber der Wortbreite der gespeicherten Abtastwerte reduziert werden, so daß kein großer Speichermehraufwand nötig ist. Durch Reduzierung der Wortbreite des Interpolationsparameters kann der Aufwand für die Multiplikation mit dem Abtastdifferenzwert stark vermindert werden.

Durch die Erfindung können Asics für eine digitale Frequenzsynthese und eine digitale Frequenzumsetzung bei sehr hohen Frequenzen realisiert werden mit hoher Frequenzeinstellgenauigkeit und minimalem Zusatzaufwand.

Zeichnungen

Anhand der Zeichnungen werden Ausführungsbeispiele der Erfindung näher erläutert. Es zeigen

Figur 1 ein Blockschaltbild zur Erzeugung einer digitalen Trägerschwingung nach der Erfindung und
Figur 2 das Prinzip einer linearen Interpolation.

Beschreibung von Ausführungsbeispielen

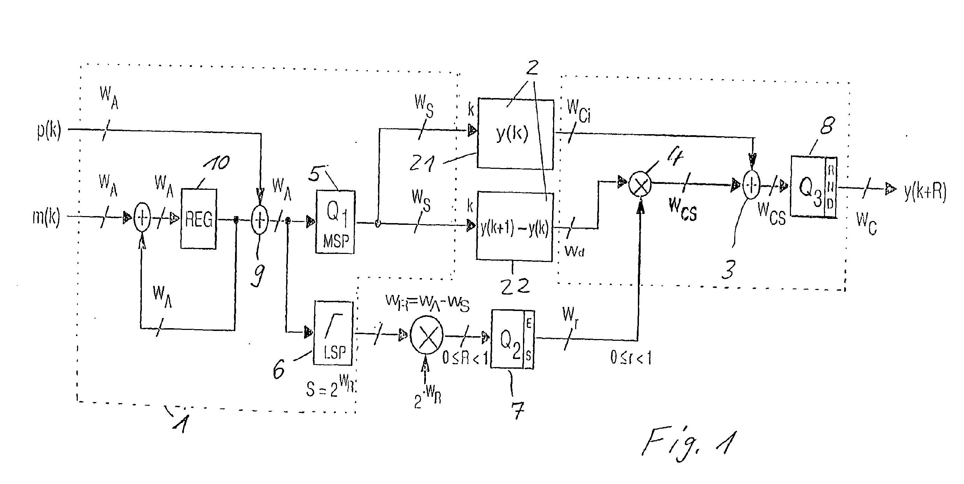

Zur Erzeugung des einstellbaren digitalen Signals werden äquidistante Abtastwerte einer Sinusgrundperiode der Frequenz $f_O = f_A/M$ verwendet, wobei die Sinusgrundperiode in Phaseninkremente insbesondere der Größe $2\pi/(2 \exp(w_A))$ aufgeteilt wird. Das Blockschaltbild in Figur 1 zeigt einen Phasenzahlenakkumulator 1, dem Phaseninkremente m(k) als natürliche Zahlen der Wortbreite $w_A$ zugeführt werden. Der Phasenzahlenakkumulator besteht aus einem Register 10 mit einer Rückführschleife. Pro Takt k = ... - 1,0,1... werden jeweils m Phasenzahlinkremente Modulo $2 \exp(w_A)$ akkumuliert, was der modulo $2\pi$ Eigenschaft der Phasenfunktion entspricht. Das Ausgangssignal des Registers 10 des Phasenzahlenakkumulators 1 weist wegen der geforderten Frequenzauflösung eine Wortlänge von beispielsweise wA = 23 bit auf. Sein aktueller Inhalt ist der Wert k * m mit dem Zeitindex k. Der Phasenzahlenakkumulator 1 wird mit der Frequenz $f_A$ getaktet. Die durch den Phasenzahlenakkumulator 1 erzeugten aktuellen Phasenzahlen $\varphi/2\pi$ bzw. $(\varphi + \pi/2)/2\pi$ werden mit einer Wortbreite $w_S$ als Adressen in eine Cosinus- bzw. eine Sinustabelle eingegeben und die dort abgespeicherten Abtastwerte einer Grund- bzw. Halb- oder Viertelperiode einer Sinuswelle zu einem komplexen Signal $e \exp(j 2\pi kft/f_A)$ zusammengeführt. Bei einer Adressenwortbreite $w_A$ sind insgesamt $N = 2 \exp(w_A)$ Abtastwerte adressierbar. Sind in den Tabellen N Abtastwerte einer ganzen Sinusperiode der Frequenz $f_0 = f_A/M$ abgespeichert, so lassen sich exakt N Frequenzen einstellen. Tatsächlich genügt es jedoch, Abtastwerte für eine Viertelperiode abzuspeichern und die weiteren Werte einer Grundperiode aus den bekannten Gesetzen der Trigonometrie zu ermitteln. Zwischenwerte zwischen diesen Abtastwerten lassen sich beispielsweise durch lineare Interpolation ermitteln (siehe auch DE 44 40 508 A1).

Aufgabe der Adreßrechnung ist es, aus dem aktuellen Phasenwert k * m modulo $2 \exp(w_A)$ beispielweise durch 2er-Komplementabschneiden auf eine Wortlänge $w_S = 10$ Bit die Adresse k des nächstliegenden Tabellenabtastwertes zu ermitteln. Das 2er-Komplementabschneiden, das heißt die Verkürzung auf die Wortlänge wS, erfolgt in der Quantisierungsstufe 5. Für die Interpolation sind sowohl die Abtastwerte y(k) als auch, im Unterschied zur Realisierung gemäß DE 44 40 508 A1, die Abtastdifferenzwerte y(k + 1) - y(k) = dy(k) abgespeichert und zwar in den Speicherbausteinen 21 und 22. Ein interpolierter Zwischenwert kann nun nach folgender Beziehung ermittelt werden:

$$y(k + r) = y(k) + r * dy(k).$$

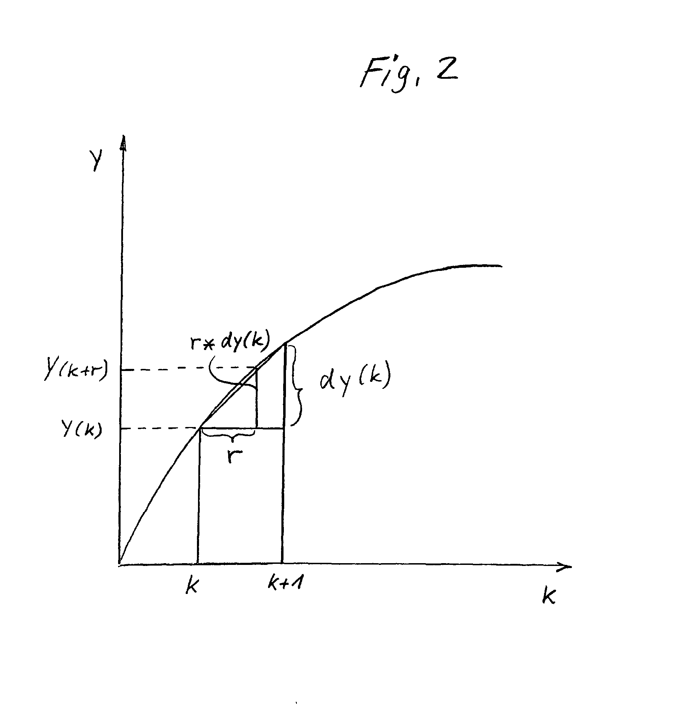

Dies ist auch in Figur 2 dargestellt. Zur Addition eines Abtastwertes und eines gewichteten Phasendifferenzwertes ist der Addierer 3 vorgesehen. Der Interpolationsparameter r, mit dem ein Abtastdifferenzwert multipliziert werden muß, entspricht der zeitlichen Lage eines Phasenrestwertes zwischen zwei Abtastwerten y(k) und y(k + 1). Der Hauptvorteil der erfindungsgemäßen Lösung gegenüber der Realisierung gemäß DE 44 40 508 A1 besteht darin, daß in einer Taktperiode ein Speicherzugriff mit gleicher Adresse k auf die Trägerabtasttabelle (Speicherbaustein 21) und Trägerabtastdifferenztabelle (Speicherbaustein 22) erfolgt. Damit entfällt der in DE 44 40 508 A1 vorgesehene Subtrahierer für die Differenzbildung von zwei Abtastwerten. Es kann auch eine sehr hohe Taktrate verwendet werden, die bei sequentiellem Speicherzugriff nicht möglich ist. Wegen der endlichen Steigung der Sinusfunktion kommt die Trägerabtastdifferenztabelle bei gleicher Quantisierung mit einer kleineren Wortbreite aus: $|dy_{max}| < 2 \exp(-4)$. Die Differenz kann vor der quantisierten Abspeicherung hochgenau berechnet werden.

Für die Gewinnung des Interpolationsparameters r für einen Abtastdifferenzwert wird die Differenz der Wortbreite $w_A$ für den Phasenzahlenakkumulator 1 und die verkürzte Wortbreite $w_S$ herangezogen sowie die tatsächliche Lage des Abtastdifferenzwertes dy(k). Dazu wird das Ausgangssignal des Registers 2 der Stufe 6 zugeführt, die nur die LSP-Werte (least significant phase), d.h. die Phasenrestwerte mit der Wortbreite wr zur Weiterverarbeitung selektiert. Die Selektion geschieht durch Abkappen der oberen $w_S$ Bits durch eine Sättigungskennlinie mit der Schwelle $S = 2 \exp (w_R)$. Es erfolgt noch eine Multiplikation Mit dem Faktor $2 \exp(- w_R)$ zur Gewinnung des Restanteils für die Frequenzfeinauflösung zwischen zwei Abtastwerten und eine Quantisierung in der Quantisierungsstufe 7, die zu einer endgültigen Wortbreite $w_r$ für den Interpolationsparameter r führt.

Am Ausgang der Addierstufe 3 befindet sich noch eine Quantisierungsstufe 8 zur Verkürzung der Wortlänge des interpolierten Abtastwertes. Um den störenden Gleichstromoffset so klein wie möglich zu halten, ist diese Wortlängenverkürzung vorzugsweise durch Runden vorzunehmen. Letztere Maßnahme kann auch bei der Quantisierungsstufe 7 durchgeführt werden.

Zur gezielten Einstellung der Nullphase kann dem Phasenzahlenakkumulator 1 ein Nullphasenwert p(k) zugeführt werden, der mit dem Ausgangssignal des Registers 2 mittels der Addierstufe 9 additiv verknüpft wird.

Die beiden Speicher 21 und 22 können natürlich auch in einem Speicherchip integriert werden, wo sowohl die Abtastwerte als auch die Abtastdifferenzwerte vorzugsweise in quantisierter Form abgelegt sind.

Zur Gewinnung eines komplexen Trägersignals kann ebenfalls nur ein Speicher 2 vorgesehen sein, der mehrfach ausgelesen wird.

Mit einer etwas aufwendigeren Adreßsteuerung genügt es, die Abspeicherung der Abtastwerte auf eine Viertelperiode zu beschränken.

**Patentansprüche**

1. Verfahren zur Erzeugung eines einstellbaren digitalen Signals mit der Abtastfrequenz $f_A$ unter Verwendung von äquidistanten Abtastwerten einer Sinus- oder Cosinusgrundperiode der Frequenz $f_0 = f_A/M$, mit folgenden Schritten:

   - zur Erzeugung des einstellbaren digitalen Signals mit der Frequenz $f_t = m * f_0$ ist ein Phasenzahlenakkumulator (1) vorgesehen, der pro Takt k = ...,-1,0,1,... jeweils m Phasenzahleninkremente modulo M akkumuliert,
   - es wird jeweils der der augenblicklichen Phasenzahl zugeordnete Abtastwert der Grundperiode verwendet,
   - die Sinus- /Cosinusgrundperiode wird in Phaseninkremente insbesondere der Größe $2 \pi/(2 \exp (w_A))$ aufgeteilt mit $w_A$ = Adressenwortbreite, wobei eine Anzahl $N < 2 \exp (w_A)$ Abtastwerte benutzt wird,
   - die aktuelle Phasenzahl wird durch eine Quantisierungsstufe (5) auf eine Wortbreite ws verkürzt,
   - mittels einer Stufe (6) werden die Phasenrestwerte (LSP-Werte) des Ausgangssignals des Phasenakkumulators (1) selektiert,
   - die Phasenrestwerte werden mit dem Faktor $2 \exp (-w_R)$ zum Erzeugen des Interpolationsparameters (r) multipliziert,
   - bei einer durch den Phasenzahlenakkumulator (1) erzeugten Phasenzahl, welcher keiner der N Abtastwerte zugeordnet ist, werden aus den jeweils dieser Phasenzahl nächstliegenden Abtastwerten Abtastdifferenzwerte für eine Interpolation mindestens erster Ordnung gebildet,
   - ein durch eine solche Interpolation interpolierter Abtastwert wird zur Erzeugung des einstellbaren digitalen Signals herangezogen,

   **gekennzeichnet durch** folgende Schritte:

- für die Interpolation werden sowohl die Abtastwerte als auch Abtastdifferenzwerte in mindestens einem Speicher (2, 21, 22) als Trägerabtasttabelle bzw. Trägerabtastdifferenztabelle abgespeichert,
- das auf die Wortbreite ws verkürzte Ausgangswort der Quantisierungsstufe (5) wird den Speichern (2, 21, 22) als Adresse für den Abtastwert wie auch den Abtastdifferenzwert zugeführt,
- während einer Taktperiode wird mittels der den Speichern (2, 21, 22) zugeführten Adresse je ein abgespeicherter Abtastwert und ein Abtastdifferenzwert aus den Speichern (2, 21, 22) ausgelesen, wobei der ausgelesene Abtastdifferenzwert **durch** einen Multiplizierer (4) mit dem Interpolationsparameter (r) multipliziert wird, der der zeitlichen Lage eines Phasenrestwertes zwischen zwei Abtastwerten entspricht, und der ausgelesene Abtastwert zu dem mit dem Interpolationsparameter (r) gewichteten Abtastdifferenzwert addiert wird.

2. Verfahren nach Anspruch 1, **dadurch gekennzeichnet, dass** die Abtastdifferenzwerte mit einer kleineren Wortbreite gespeichert werden als die Abtastwerte selbst.

3. Verfahren nach Anspruch 1 oder 2, **dadurch gekennzeichnet, dass** eine aktuelle Phasenzahl mittels 2er-Komplementabschneiden auf eine Wortbreite ws verkürzt wird und dass dieser verkürzte Wert die Adresse für einen der $N = 2 \exp (ws)$ abgespeicherten Abtastwerte sowie Abtastdifferenzwerte bildet.

4. Verfahren nach Anspruch 3, **dadurch gekennzeichnet, dass** zur Gewinnung des Interpolationsparameters r für einen Abtastdifferenzwert die Differenz der Wortbreite $w_A$ für den Phasenzahlenakkumulator (1) und die verkürzte Wortbreite ws herangezogen wird sowie die tatsächliche Lage des Abtastdifferenzwertes.

5. Verfahren nach einem der Ansprüche 1 bis 4, **dadurch gekennzeichnet, dass** der Interpolationsparameter (r) in seiner Wortbreite insbesondere durch eine Quantisierung (7) reduziert wird, bevor er mit einem Abtastdifferenzwert multipliziert wird.

6. Verfahren nach einem der Ansprüche 1 bis 5, **dadurch gekennzeichnet, dass** Abtastwerte und/oder Abtastdifferenzwerte lediglich für ein Viertel der Grundperiode abgespeichert sind, welche aber für die ganze Grundperiode benutzt werden.

7. Verfahren nach einem der Ansprüche 1 bis 6, **dadurch gekennzeichnet, dass** im Falle eines komplexen Trägersignals ein einziger Speicher (2) mit Abtastwerten und Abtastdifferenzwerten benutzt wird, der zur Gewinnung des einstellbaren digitalen Signals mehrfach ausgelesen wird.

8. Verfahren nach einem der Ansprüche 1 bis 6, **dadurch gekennzeichnet, dass** die Abspeicherung der Abtastwerte und Abtastdifferenzwerte in quantisierter Form erfolgt.

9. Verfahren nach einem der Ansprüche 1 bis 8, **dadurch gekennzeichnet, dass** die Nullphase gezielt eingestellt wird.

10. Anordnung zur Erzeugung eines einstellbaren digitalen Signals mit der Abtastfrequenz $f_A$ unter Verwendung von äquidistanten Abtastwerten einer Sinus- oder Cosinusgrundperiode der Frequenz $f_0 = f_A/M$ wobei zur Erzeugung des einstellbaren digitalen Signals mit der Frequenz $f_t = m * f_0$ ein Phasenzahlenakkumulator (1) vorgesehen ist, der pro Takt $k = ...-1,0,1,...$ jeweils m Phasenzahleninkremente modulo M akkumuliert, und wobei jeweils der der augenblicklichen Phasenzahl zugeordnete Abtastwert der Grundperiode verwendet wird und die Sinus-/Cosinusgrundperiode in Phaseninkremente insbesondere der Größe $2\pi / (2 \exp (w_A))$ aufgeteilt wird mit $w_A = $ Adressenwortbreite sowie eine Anzahl $N < 2 \exp (w_A)$ Abtastwerte benutzt wird, eine Quantisierungsstufe (5) zum Verkürzen der aktuellen Phasenzahl auf eine Wortbreite $w_S$, eine Stufe (6) zum Selektieren der Phasenrestwerte (LSP-Werte) des Ausgangssignals des Phasenakkumulators (1) und ein Multiplizierer zum Multiplizieren der Phasenrestwerte mit dem Faktor $2 \exp (-w_R)$ zum Erzeugen des Interpolationsparameters (r) vorgesehen sind, und bei einer durch den Phasenzahlenakkumulator (1) erzeugten Phasenzahl, welcher keiner der N Abtastwerte zugeordnet ist, aus den jeweils dieser Phasenzahl nächstliegenden Abtastwerten Abtastdifferenzwerte für eine Interpolation mindestens erster Ordnung gebildet werden und ein durch eine solche Interpolation gewonnener interpolierter Abtastwert zur Erzeugung des einstellbaren digitalen Signals herangezogen wird mit folgenden Merkmalen:

- mindestens einem Speicher (2, 21, 22) für die Abspeicherung sowohl der Abtastwerte als auch von Abtastdifferenzwerten in einer Trägerabstandtabelle bzw. Trägerabtastdifferenztabelle, wobei die Quantisierungsstufe (5) und die Speicher (2, 21, 22) miteinander verbunden und ausgebildet sind, den Speichern (2, 21, 22) das auf die Wortbreite ws verkürzte Ausgangswort der Quantisierungsstufe (5) als Adresse für den Abtastwert wie auch den Abtastdifferenzwert zuzuführen,

- einem Multiplizierer (4) zum Multiplizieren des aus dem Speicher (2, 22) über die zugeführte Adresse ausgelesenen Abtastdifferenzwertes mit dem Interpolationsparameter (r), welcher der zeitlichen Lage eines Phasenrestwertes zwischen zwei Abtastwerten entspricht, und
- einem Addierer (3) zur Addition das aus dem Speicher (2, 21) über die zugeführte Adresse ausgelesenen Abtastwertes und des mit dem Interpolationsparameter (r) gewichteten Abtastdifferenzwertes.

## Claims

1. A method for the generation of an adjustable digital signal having the sampling frequency $f_A$ using equidistant sampling values of a sinusoidal fundamental period or of a cosinusoidal fundamental period of the frequency $f_0 = f_A/M$ comprising the following steps:

   - a phase number accumulator (1) is provided for the generation of the adjustable digital signal having the frequency $f_t = m * f_0$ and accumulates m phase number increments modulo M per cycle k = ...,-1,0,1,... in each case;
   - the sampling value of the fundamental period associated with the instantaneous phase number is used in each case;
   - the sinusoidal/cosinusoidal fundamental period is divided into phase increments of the value $2\pi/(2 \exp(w_A))$ with $w_A$ = address word width, in particular where a number $N < 2 \exp(w_A)$ sampling values is used;
   - the current phase number is abbreviated to a word width $w_S$ by a quantisation stage (5);
   - the residual phase values (LSP values) of the output signal of the phase accumulator (1) are selected by means of a stage (6);
   - the residual phase values are multiplied by the factor $2 \exp(-w_R)$ for the generation of the interpolation parameter (r);
   - with a phase number generated by the phase number accumulator (1) which is not associated with any of the N sampling values, sampling difference values for an interpolation of at least a first order are formed from the respective sampling values lying closest to this phase number;
   - a sampling value interpolated by such an interpolation is used for the generation of the adjustable digital signal,

   **characterised by** the following steps:

   - for the interpolation, both the sampling values and the sampling difference values are stored in at least one memory (2, 21, 22) as a carrier sample table or a carrier sample difference table;
   - the starting word of the quantisation stage (5) abbreviated to the word width $w_S$ is supplied to the memories (2, 21, 22) as the address for the sampling value and also for the sampling difference value;
   - a stored sampling value and a sampling difference value are respectively read out of the memories (2, 21, 22) during a cycle period by means of the address supplied to the memories (2, 21, 22), with the sampling difference value read out being multiplied by a multiplier (4) by the interpolation parameter (r) which corresponds to the time position of a residual phase value between two sampling values and the sampling value read out is added to the sampling difference value weighted by the interpolation parameter (4).

2. A method in accordance with claim 1, **characterised in that** the sampling difference values are stored with a smaller word width than the sampling values themselves.

3. A method in accordance with claim 1 or claim 2, **characterised in that** a current phase number is abbreviated, by means of two-complement cutting to a word width $w_S$; and **in that** this abbreviated value forms the address for one of the N = 2 exp (s) stored sampling values and sampling difference values.

4. A method in accordance with claim 3, **characterised in that**, for the obtaining of the interpolation parameter r for a sampling difference value, the difference of the word width $w_A$ for the phase number accumulator (1) and the abbreviated word width $w_S$ are used as well as the actual position of the sampling difference value.

5. A method in accordance with any one of the claims 1 to 4,
   **characterised in that** the interpolation parameter (r) is in particular reduced in its word width by a quantisation (7) before it is multiplied by a sampling difference value.

6. A method in accordance with any one of the claims 1 to 5,

**characterised in that** sampling values and/or sampling difference values are only stored for a quarter of the fundamental period, but are used for the whole fundamental period.

7. A method in accordance with any one of the claims 1 to 6,
   **characterised in that**, in the case of a complex carrier signal, one single memory (2) with sampling values and sampling difference values is used which is read out a multiple of times to obtain the adjustable digital signal.

8. A method in accordance with any one of the claims 1 to 6,
   **characterised in that** the storage of the samplings values and sampling difference values takes place in quantified form.

9. A method in accordance with any one of the claims 1 to 8,
   **characterised in that** the zero phase is directly set.

10. An arrangement for the generation of an adjustable digital signal having the sampling frequency $f_A$ using equidistant sampling values of a sinusoidal fundamental period or of a cosinusoidal fundamental period of the frequency $f_0 = f_A/M$, wherein a phase number accumulator (1) is provided for the generation of the adjustable digital signal having the frequency $f_t = m * f_0$ and accumulates m phase number increments modulo M per cycle k = ...,-1,0,1,... in each case; and wherein the sampling value of the fundamental period associated with the instantaneous phase number is used in each case; and the sinusoidal/cosinusoidal fundamental period is divided into phase increments of the value $2\pi/(2 \exp(w_A))$ in particular where $w_A$ = address word and a number $N < 2 \exp(w_A)$ sampling values is used; a quantisation stage (5) is provided for the abbreviation of the current phase number to a word width $w_S$, a stage (6) is provided for the selection of the residual phase values (LSP values) of the output signal of the phase accumulator (1) and a multiplier is provided for the multiplication of the residual phase values by the factor $2 \exp(-w_R)$ for the generation of the interpolation parameter (r); and with a phase number generated by the phase number accumulator (1) which is not associated with any of the N sampling values, sampling difference values for an interpolation of at least a first order are formed from the respective sampling values lying closest to this phase number and an interpolated sampling value obtained by such an interpolation is used for the generation of the adjustable digital signals, having the following features:

    - at least one memory (2, 21, 22) for the storage of both the sampling values and of sampling difference values in a carrier sampling table or a carrier sampling difference table, with the quantisation stage (5) and the memories (2, 21, 22) being connected to one another and made to supply the memories (2, 21, 22) with the starting word of the quantisation stage (5) abbreviated to the word width $w_s$ as the address for the sampling value and for the sampling difference value;
    - a multiplier (4) for the multiplication of the sampling difference value read out of the memory (2, 22) via the supplied address by the interpolation parameter (r) which corresponds to the time position of a residual phase value between two sampling values; and
    - an adder (3) for the addition of the sampling value read out of the memory (2, 21) via the supplied address and of the sampling difference value weighted by the interpolation parameter (r).

**Revendications**

1. Procédé pour générer un signal numérique réglable à la fréquence de balayage $f_A$ en utilisant des valeurs de balayage équidistantes d'une période de base en sinus ou cosinus à la fréquence $f_O = f_A/M$, comportant les étapes suivantes :

   -- pour générer le signal numérique réglable à la fréquence $f_t = m * f_o$, on prévoit un accumulateur de nombres de phases (1) qui accumule à chaque cycle k = ..., - 1, 0, 1,... m incréments de nombres de phases respectifs modulo M,
   -- on utilise la valeur de balayage de la période de base associée respectivement au nombre de phases instantané,
   -- la période de base en sinus ou cosinus est subdivisée en incréments de phases ayant en particulier pour valeur $2\pi/(2 \exp(w_A))$, avec $w_A$ = largeur du mot adresse, et on utilise un nombre de valeurs de balayage $N < 2 \exp(w_A)$,
   -- le nombre de phases actuel est raccourci, par un étage de quantification (S), à une largeur de mot $w_s$,
   -- au moyen d'un seuil (6) on sélectionne les valeurs de restes de phases (valeurs LSP) du signal de sortie de l'accumulateur de phase (1),

-- les valeurs de restes de phases sont multipliées par le facteur 2 exp (-$w_R$) pour générer le paramètre d'interpolation (r),

-- pour un nombre de phases, généré par l'accumulateur de nombre de phases (1), qui n'est associé à aucune des N valeurs de balayage, on forme, à partir des valeurs de balayage qui tombent respectivement au plus près de ce nombre de phases, des valeurs de différences de balayage pour une interpolation au moins du premier ordre,

-- on exploite une valeur de balayage interpolée par une telle interpolation pour générer le signal numérique réglable,

**caractérisé par** les étapes suivantes :

-- pour l'interpolation, on mémorise aussi bien les valeurs de balayage que les valeurs de différence de balayage dans au moins une mémoire (2, 21, 22) à titre de tableau de balayage porteur ou de tableau de différence de balayage porteur,

-- le mot, raccourci à la largeur de mot $w_s$, à la sortie de l'étage de quantification (5) est amené aux mémoires (2, 21, 22) à titre d'adresse pour la valeur de balayage, tout comme la valeur de différence de balayage,

-- pendant une période de cycle, au moyen de l'adresse amenée aux mémoires (2, 21, 22), on lit à partir des mémoires (2, 21, 22) respectivement une valeur de balayage et une valeur de différence de balayage mémorisées, et

la valeur de différence de balayage lue est multipliée, à l'aide d'un multiplicateur (4), avec le paramètre d'interpolation (r) qui correspond à la situation temporelle d'une valeur de reste de phase entre deux valeurs de balayage, et la valeur de balayage lue est ajoutée à la valeur de différence de balayage pondérée avec le paramètre d'interpolation (r).

2. Procédé selon la revendication 1, **caractérisé en ce que** les valeurs de différence de balayage sont mémorisées avec une largeur de mot plus petite que les valeurs de balayage elles-mêmes.

3. Procédé selon la revendication 1 ou 2, **caractérisé en ce qu'**un nombre de phases actuel est raccourci par un écrêtage complémentaire d'ordre 2 à une largeur de mot $w_S$, et **en ce que** cette valeur raccourcie forme l'adresse pour l'une des N = 2 exp ($w_S$) valeurs de balayage et valeurs de différence de balayage mémorisées.

4. Procédé selon la revendication 3, **caractérisé en ce que** pour récupérer le paramètre d'interpolation r pour une valeur de différence de balayage, on exploite la différence de la largeur de mot $w_A$ pour l'accumulateur de nombres de phases (1) et la largeur de mot raccourcie $w_S$, ainsi que la position réelle de la valeur de différence de balayage.

5. Procédé selon l'une des revendications 1 à 4, **caractérisé en ce que** le paramètre d'interpolation (r) et réduit dans sa largeur de mot, en particulier par une quantification (7), avant d'être multiplié par une valeur de différence de balayage.

6. Procédé selon l'une des revendications 1 à 5, **caractérisé en ce que** des valeurs de balayage et/ou des valeurs de différence de balayage sont mémorisées uniquement pour un quart de la période de base, mais sont utilisées pour la totalité de la période de base.

7. Procédé selon l'une des revendications 1 à 6, **caractérisé en ce que**, dans le cas d'un signal porteur complexe, on utilise une unique mémoire (2) avec des valeurs de balayage et des valeurs de différence de balayage qui sont lues plusieurs fois pour récupérer le signal numérique réglable.

8. Procédé selon l'une des revendications 1 à 6, **caractérisé en ce que** la mémorisation des valeurs de balayage et des valeurs de différence de balayage a lieu sous forme quantifiée.

9. Procédé selon l'une des revendications 1 à 8, **caractérisé en ce que** la phase zéro est réglée de façon ciblée.

10. Agencement pour générer un signal numérique réglable
à la fréquence de balayage $f_A$ en utilisant des valeurs de balayage équidistantes d'une période de base en sinus ou cosinus à la fréquence $f_O = f_A/M$ dans lequel, pour générer le signal numérique réglable à la fréquence $f_t = m * f_o$, il est prévu un accumulateur de nombres de phases (1) qui accumule à chaque cycle k = ..., - 1, 0, 1,... m incréments de nombres de phases respectifs modulo M, la valeur de balayage de la période de base associée respectivement au nombre de phases instantané est utilisée, la période de base en sinus ou cosinus est subdivisée en incréments de phases ayant en particulier pour valeur $2\pi/(2\exp(w_A))$, avec $w_A$ = largeur du mot adresse, et un nombre de valeurs de balayage $N < 2\exp(w_A)$ est utilisé, il est prévu i) un étage de quantification (S) pour raccourcir le nombre de phases actuel à une largeur de mot $w_S$, ii) un seuil (6) pour sélectionner les valeurs de restes de phases (valeurs LSP) du signal de sortie de l'accumulateur de phase (1), et iii) un multiplicateur pour multiplier les valeurs de restes de phases par le facteur $2\exp(-w_R)$ pour générer le paramètre d'interpolation (r) ; et pour un nombre de phases, généré par l'accumulateur de nombre de phases (1), qui n'est associé à aucune des N valeurs de balayage, à partir des valeurs de balayage qui tombent respectivement au plus près de ce nombre de phases, des valeurs de différences de balayage pour une interpolation au moins du premier ordre sont formées, et une valeur de balayage interpolée par une telle interpolation est exploitée pour générer le signal numérique réglable, **caractérisé par** les éléments suivants :

-- au moins une mémoire (2, 21, 22) pour mémoriser aussi bien les valeurs de balayage que les valeurs de différence de balayage dans un tableau de balayage porteur ou un tableau de différence de balayage porteur, l'étage de quantification (5) et la mémoire (2, 21, 22) étant reliés l'un à l'autre et réalisés de manière à amener aux mémoires (2, 21, 22) le mot, raccourci à la largeur de mot $w_s$, à la sortie de l'étage de quantification (5), à titre d'adresse pour la valeur de balayage, tout comme pour la valeur de différence de balayage,
-- un multiplicateur (4) pour multiplier la valeur de différence de balayage, lue au moyen de l'adresse amenée, avec le paramètre d'interpolation (r) qui correspond à la situation temporelle d'une valeur de reste de phase entre deux valeurs de balayage, et
-- un additionneur (3) pour additionner la valeur de balayage, lue au moyen de l'adresse amenée, à la valeur de différence de balayage pondérée avec le paramètre d'interpolation (r).

Fig. 1

Fig. 2